(19) **Europäisches Patentamt**

**European Patent Office**

**Office européen des brevets**

(11) **EP 0 742 615 B1**

(12) **FASCICULE DE BREVET EUROPEEN**

(45) Date de publication et mention
de la délivrance du brevet:
**19.09.2001 Bulletin 2001/38**

(51) Int Cl.⁷: **H01S 3/06**, H01S 3/109,
H01S 3/113

(21) Numéro de dépôt: **96401014.4**

(22) Date de dépôt: **10.05.1996**

(54) **Microlaser monolithique déclenché et matériau non linéaire intracavité**

Monolitischer gütegeschalteter Mikrolaser mit nichtlinearem Material im Resonator

Monolithic Q-switched microlaser and non-linear intracavity material

(84) Etats contractants désignés:
**DE FR GB IT**

(30) Priorité: **12.05.1995 FR 9505650**

(43) Date de publication de la demande:
**13.11.1996 Bulletin 1996/46**

(73) Titulaire: **COMMISSARIAT A L'ENERGIE
ATOMIQUE**
**75015 Paris (FR)**

(72) Inventeurs:
• **Fulbert, Laurent**
**38500 Voiron (FR)**
• **Molva, Engin**
**38000 Grenoble (FR)**

(74) Mandataire: **Moutard, Pascal Jean et al**
**c/o Brevatome,**
**25, rue de Ponthieu**
**75008 Paris (FR)**

(56) Documents cités:
EP-A- 0 523 861          EP-A- 0 596 714
WO-A-90/09688          GB-A- 1 566 716
US-A- 4 191 931          US-A- 4 982 405
US-A- 5 048 051          US-A- 5 388 114
US-A- 5 394 413

• PROCEEDINGS OF THE CONFERENCE ON
LASERS AND ELECTRO OPTICS (CLEO),
TECHNICAL DIGEST SERIES VOLUME 12,
PAPER CWG33, Mai 1992, ANAHEIM
CALIFORNIA, pages 282-283, XP002009684 A.
EDA ET AL: "Microchip lasers fabricated by a
novel photolithography technique"
• OPTICS LETTERS, vol. 10, no. 5, Mai 1985,
WASHINGTON US, pages 232-234, XP002009685
C.S. LEE ET AL: "Observation of optical
bistability due to resonator configuration
transition"

**Description**

Domaine technique

L'invention se rapporte au domaine des microlasers solides déclenchés.

L'avantage principal du microlaser réside dans sa structure en un empilement de multicouches, qui est sa caractéristique essentielle. Le milieu actif laser est constitué par un matériau de faible épaisseur entre 150-1000 μm et de petites dimensions (quelques mm²), sur lequel des miroirs diélectriques de cavité sont directement déposés. Ce milieu actif peut être pompé par une diode laser III-V qui est soit directement hybridée sur le microlaser, soit couplée à ce dernier par fibre optique. La possibilité d'une fabrication collective utilisant les moyens de la microélectronique autorise une production de masse de ces microlasers à très faible coût.

Les microlasers ont de nombreuses applications, dans des domaines aussi variés que l'industrie automobile, l'environnement, l'instrumentation scientifique, la télémétrie.

Etat de l'art antérieur

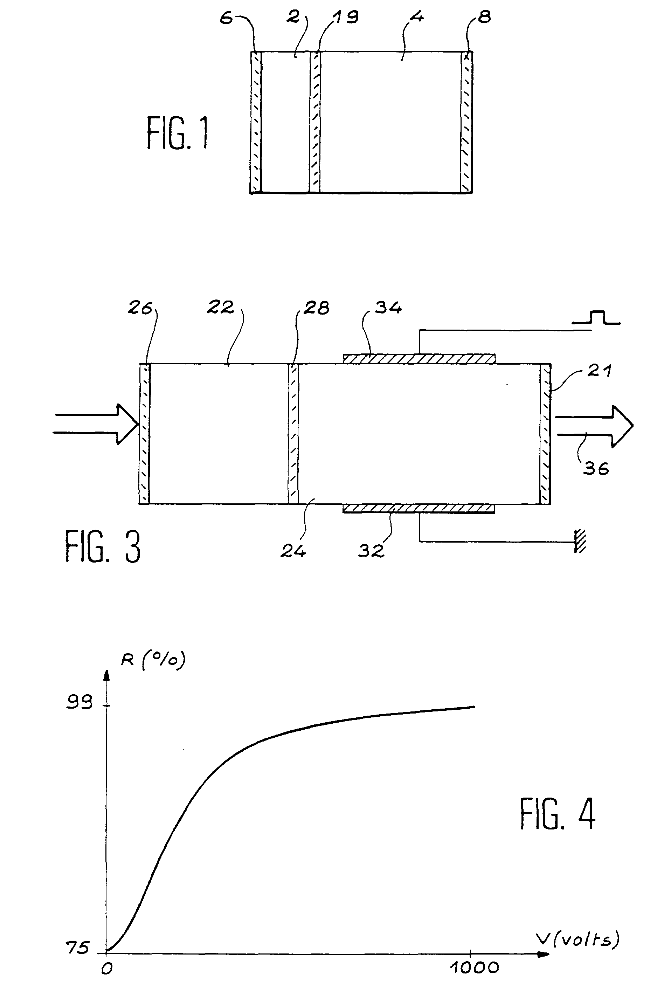

Un microlaser émettant en continu, et doublé en fréquence a été réalisé : on en trouve une description dans l'article de N. MacKinnon et al. intitulé "A laser diode array pumped, Nd:YVO$_4$/KTP, composite material microchip laser", paru dans Optics Communications, vol. 105, p. 183-187 (1994). Le microlaser décrit est formé (figure 1) d'un cristal 2 de YVO$_4$:Nd d'épaisseur 0,5mm sur lequel est rapporté un cristal 4 de KTP d'épaisseur 2mm. Les miroirs 6, 8 de la cavité sont à haute réflexion à 1, 064μm sur les faces d'entrée et de sortie, et à haute transmission à 532nm. Le dispositif est pompé optiquement par une diode laser à environ 800nm. Les deux miroirs ayant une réflectivité de l'ordre de 99,8% à 1,64μm, la puissance circulant à l'intérieur de la cavité à 1,064μm est importante (de l'ordre de quelques watts à quelques dizaines de watts). Le rayonnement à 1,064μm est converti en rayonnement à 532nm par le cristal non linéaire de KTP. L'efficacité de conversion entre la diode de pompage à 808nm et le rayonnement à 532nm est d'environ 4%.

Le dispositif microlaser décrit dans ce document présente les problèmes suivants :

- tout d'abord, le rendement de conversion est faible, en raison de la faible puissance circulant à l'intérieur de la cavité microlaser. Les miroirs à haute réflexion à 1,064μm doivent être d'excellente qualité pour obtenir une cavité microlaser ayant un coefficient de surtension Q important. De tels miroirs sont difficiles à réaliser et sont coûteux, ce qui est incompatible avec la possibilité d'une fabrication collective et en masse des microlasers,
- de plus, le microlaser obtenu est monolithique, mais il est fabriqué par un procédé manuel, qui met en oeuvre des étapes de collage de morceaux prédécoupés. Ce procédé est incompatible avec la nécessité de fabriquer, par ailleurs, des microlasers en masse, à faible coût de production.

US-A-5 394 413 décrit une cavité microlaser comportant un premier matérau actif solide, une couche mince de matériau absorbant saturable directement déposé sur le milieu actif solide constituant des moyens distincts du matériau actif solide, de déclenchement passif de la cavité, et au moins un élément constitué d'un second matériau optiquement non linéaire permettant de multiplier la fréquence de base de la cavité microlaser par un nombre entier, étant incorporé à l'extérieur de la cavité.

WO-A-90/09688 décrit une cavité microlaser monolithique avec un matériau non-linéaire permettant de multiplier la fréquence de base de la cavité qui est situé soit à l'intérieur soit à l'extérieur de la cavité. La possibilité de déclenchement actif de cette cavité microlaser en utilisant des électrodes déposées par photolithogravure est mentionnée.

Exposé de l'invention

L'invention a pour objet de proposer une cavité microlaser dont le faisceau est multiplié en fréquence (doublé, triplé, ...), le rendement de l'opération de doublage, de triplage,... étant élevé. Par ailleurs, la structure de la cavité microlaser doit être compatible avec les procédés de fabrication collective mettant en oeuvre les moyens de la microélectronique. Enfin, la structure obtenue doit être monolithique.

De façon plus précise, l'invention a pour objet une cavité microlaser comportant un milieu actif solide, et des moyens de déclenchement de la cavité caractérisée en ce qu'au moins un élément en un matériau optiquement non linéaire permettant de multiplier la fréquence de base de la cavité microlaser par un nombre entier n (n≥2), est incorporé à l'intérieur de la cavité.

En fonctionnement déclenché, le microlaser émet des impulsions de grande puissance crête et de faible largeur temporelle. La puissance du rayonnement laser intracavité atteint alors des valeurs très élevées, supérieures de plusieurs ordres de grandeur à la puissance intracavité obtenue en fonctionnement continu. Le rendement de conversion de la fréquence laser en fréquence double ou triple, dans le matériau optiquement non linéaire, est donc très bon, puisque ce rendement dépend de la puissance du laser. Ainsi, il est possible de s'affranchir de la présence de miroirs d'entrée et de sortie de la cavité ayant un coefficient de réflexion extrêmement élevé à la fréquence de base de la cavité microlaser : rappelons que des réflectivités de l'ordre de 99,9% sont nécessaires pour un fonctionnement correct en continu, alors que des réflectivités plus faibles suffisent en "déclenché".

Selon l'invention, la cavité microlaser est déclenchée passivement par un absorbant saturable.

Un autre aspect de l'invention concerne la disposition relative de l'absorbant saturable et du milieu actif, à l'intérieur de la cavité microlaser.

D'une façon générale, dans les lasers connus déclenchés passivement à l'aide d'un absorbant saturable, les arrangements suivants ont été proposés pour l'intérieur de la cavité laser.

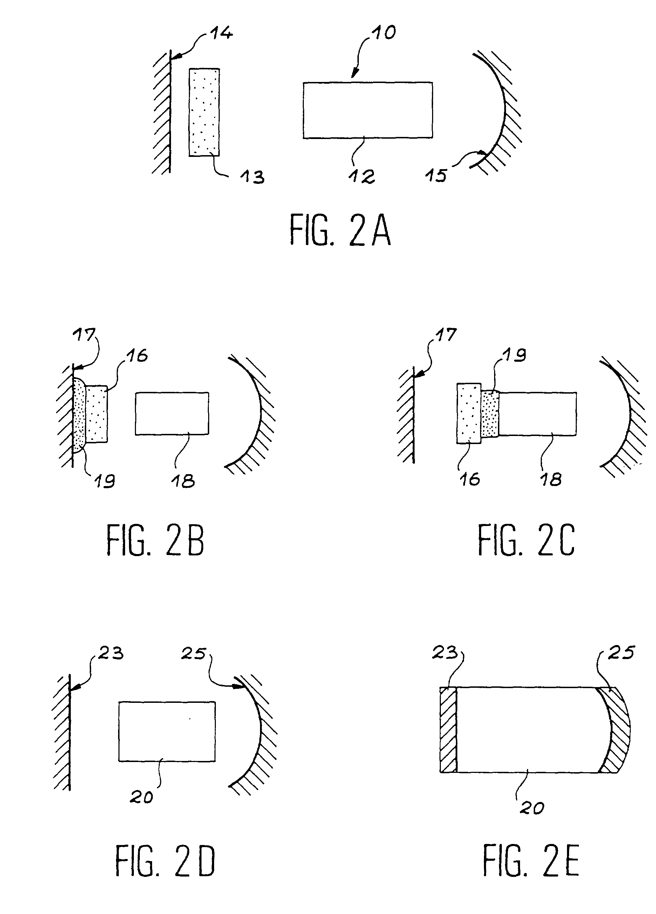

1- Un premier arrangement est illustré sur la figure 2A où la référence 10 représente une cavité laser, et les références 12, 13, 14, 15 désignent respectivement le matériau actif laser, l'absorbant saturable et les miroirs d'entrée et de sortie de la cavité.

Il n'y a aucun contact entre l'absorbant saturable 13, d'une part, et les autres éléments de la cavité 10, d'autre part.

Dans ce type de dispositif, il est nécessaire d'aligner optiquement les éléments de la cavité. En outre, des réglages optiques peuvent être nécessaires au cours de l'utilisation du laser.

2- Dans les arrangements schématisés sur les figures 2B et 2C, un contact est assuré entre l'absorbant saturable 16 et un miroir 17 (figure 2B) ou le matériau actif laser 18 (figure 2C) à l'aide d'une colle optique 19.

Mais la colle introduit un facteur d'absorption résiduelle ainsi que des différences d'indices à l'interface colle-matériaux collés. De plus, un éventuel défaut de parallélisme entre les éléments collés peut être lui-aussi source de pertes dans la cavité laser.

3- Les figures 2D et 2E illustrent une troisième disposition possible. Les références 23, 25 désignent les miroirs d'entrée et de sortie de la cavité laser. La référence 20 y représente le matériau actif laser, mais celui-ci est codopé avec les ions actifs laser et les ions d'absorbant saturable. Le même milieu sert alors de milieu actif et de milieu absorbant saturable. Il est donc impossible de régler indépendamment les propriétés du matériau laser et de l'absorbant saturable.

Or, l'épaisseur du milieu influe à la fois sur l'absorption de l'absorbant saturable et sur l'absorption des ions actifs laser, ainsi que sur la structure de modes du laser. D'autre part, les coefficients d'absorption des ions actifs laser et absorbants saturables sont directement liés aux concentrations de ces ions, qui sont fixées définitivement lors de la croissance des cristaux et ne peuvent être modifiées par la suite. Pour chaque configuration laser, il faut donc refaire un nouveau cristal. Enfin, dans le cas des lasers à déclenchement passif où le même ion (par exemple Er) est utilisé à la fois pour l'action laser et comme absorbant saturable, il est impossible d'utiliser cette méthode de codopage. En effet, le même ion pourra servir comme ion actif ou comme ion absorbant saturable à condition que les concentrations soient très différentes. Pour l'absorbant saturable, la concentration doit être beaucoup plus élevée que pour le matériau actif laser.

Pour remédier aux problèmes ci-dessus, l'invention propose de déposer l'absorbant saturable sous la forme d'une couche mince, directement sur le matériau actif de la cavité microlaser.

Un des avantages principaux de l'invention est dans la structure de la cavité microlaser (ou du microsystème laser consistant en un microlaser associé à de la microoptique) déclenchée, qui consiste alors en un empilement de couches, permettant de garder la possibilité d'une fabrication collective à bas coût. Cette structure multicouches ne remet pas en cause la simplicité et les procédés de fabrication collective, donc à faible coûts, des microlasers, tels qu'ils ont été développés pour les microlasers continus. Elle permet de réaliser des microlasers déclenchés passivement, monolithiques, autoalignés (sans aucun réglage optique) et indéréglables. Cette structure ne nécessite aucune opération de collage ni aucune opération complexe d'alignement.

Un autre avantage du microlaser par rapport au laser "codopé" est qu'on sépare le milieu actif de l'absorbant saturable, mais qu'on évite le collage des deux milieux tout en gardant une structure monolithique. Ainsi, on peut :

- d'une part régler indépendamment les épaisseurs (pendant le dépôt des couches ou par amincissement mécanique après le dépôt des couches) et les concentrations des ions dans les deux milieux,
- d'autre part, grâce à cette séparation, réaliser des lasers déclenchés où le même ion (par exemple Er) peut être utilisé comme ion actif et comme absorbant saturable, avec des concentrations différentes.

Selon un autre aspect de l'invention, la couche mince peut être composée d'un colorant organique en solution dans un solvant polymère. Selon une variante, la couche mince est susceptible d'avoir été déposée par épitaxie en phase liquide.

Dans le domaine des microlasers, une technique de déclenchement actif est décrite dans l'article de J.J.

Zayhowski et al., intitulé "Diode-pumped microchip lasers electro-optically Q-switched at high pulse repetition rates", paru dans Optics Letters, vol. 17, N°17, pp. 1201-1203, (1992).

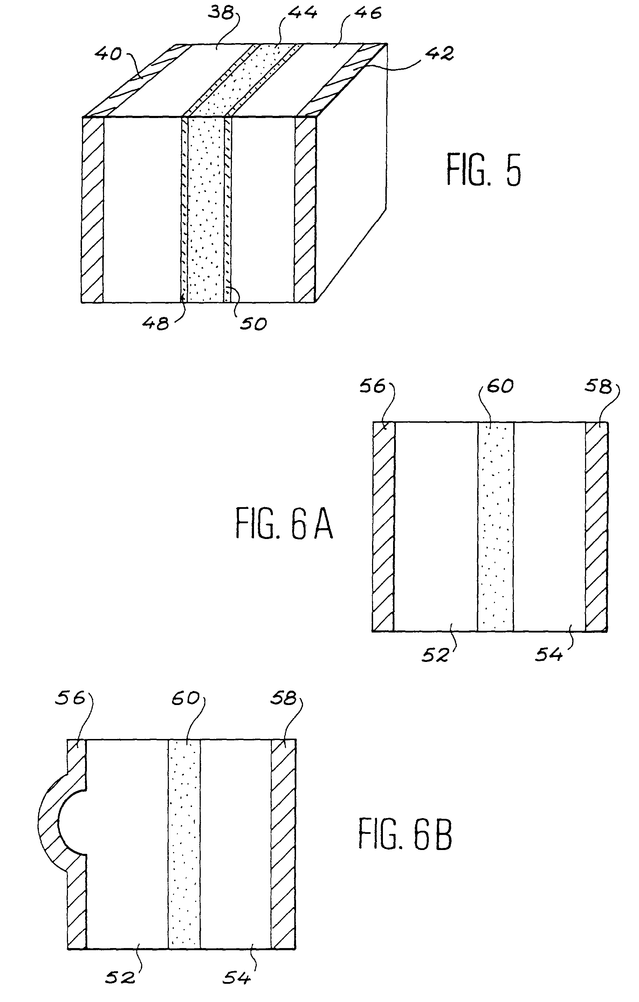

Dans ce document, le déclenchement est réalisé dans une configuration de deux cavités Fabry-Perot couplées. Un tel ensemble est illustré sur la figure 3, où la référence 22 désigne le milieu actif laser et la référence 24 un matériau électro-optique déclencheur (LiTaO$_3$). Le milieu actif 22 laser, de longueur L$_1$, forme, avec un miroir d'entrée 26 et un miroir intermédiaire 28 une première cavité Fabry-Perot. Le matériau déclencheur, de longueur L$_2$, forme, avec le miroir intermédiaire 28 et le miroir de sortie 21, une deuxième cavité Fabry-Perot. Le déclenchement se fait en modifiant la longueur optique du matériau déclencheur 24 par une action externe : des électrodes de déclenchement 32, 34 sont placées perpendiculairement à l'axe du faisceau laser 36, de part et d'autre du matériau 24. Si une tension V est appliquée entre ces électrodes, un champ électrique E=V/e, où e est la distance entre les électrodes (ce qui correspond à l'épaisseur du matériau électro-optique) en résulte. L'indice optique n$_2$, et par conséquent la longueur optique n$_2$L$_2$, du matériau électro-optique est modifié par l'action du champ E. Ceci affecte le couplage des cavités et modifie la réflectivité du miroir intermédiaire 28 vu par le milieu laser.

Pour un microlaser YAG:Nd émettant vers 1,06 µm et un matériau déclencheur constitué par du LiTaO$_3$ d'épaisseur environ égale à 1 mm, on a typiquement : n$_1$=1,8, n$_2$=2, L$_1$=500 µm, L$_2$=900µm. La variation maximum de réflectivité de la deuxième cavité est obtenue pour dλ/λ=dL$_2$/L$_2$=dn$_2$/n$_2$=10$^{-4}$ environ. Cette variation d'indice est obtenue en appliquant un champ électrique de 10$^4$ volts/cm environ dans le matériau déclencheur. Il est possible d'assimiler la deuxième cavité (électro-optique) à un miroir de sortie de la première cavité constituée du matériau laser. La réflectivité de ce miroir de sortie est variable et commandée par la tension de commande externe appliquée aux électrodes 32, 34. La figure 4 montre la variation de la réflectivité R de la deuxième cavité en fonction de la tension V appliquée. Pour le cas où les trois miroirs 26, 28, 21 ont des réflectivités respectivement égales à 99%, 95% et 50%, la réflectivité de la deuxième cavité va varier entre 75% et 99%. Ainsi, pour le milieu actif ceci revient à faire varier la réflectivité du miroir de sortie entre 75% et 99%, par une commande de tension externe. En fait, on voit d'après le diagramme de la figure 4 qu'il faut appliquer plusieurs centaines de volts pour obtenir une réflectivité voisine de 90% et qu'il faut appliquer environ 1000 volts pour obtenir une réflectivité de l'ordre de 99%, et ceci pour une distance inter-électrodes de 1mm.

Ce type de microlasers présente des problèmes.

Tout d'abord, le microlaser est fabriqué par un procédé manuel (il met en oeuvre des étapes de collage de morceaux prédécoupés). Ceci impose une limite inférieure pour les dimensions géométriques qui sont au minimum autour de 1mm, et en particulier pour la distance entre les deux électrodes. En outre, un autre problème est la nécessité d'atteindre un champ E suffisant pour le déclenchement. Il est en effet nécessaire d'appliquer une tension de l'ordre de 1000 volts entre les deux électrodes, et ceci en un temps très court (moins de 1 nanoseconde) et sur des puces laser d'environ 1 mm$^3$ de volume. Ceci est très difficile à réaliser en pratique et nécessite une électronique sophistiquée incompatible avec la simplicité et le bas coût de production du microlaser.

Afin de résoudre ce problème, et selon un exemple pas conforme à l'invention le milieu actif laser forme une première cavité résonnante entre un miroir d'entrée et un miroir intermédiaire, un second matériau forme une seconde cavité résonnante entre le miroir intermédiaire et un miroir de sortie, l'indice optique de ce matériau étant apte à être modulé par une perturbation extérieure, et des moyens de réduction de la taille du faisceau laser sont disposés en entrée de la première cavité résonnante, l'ensemble des deux cavités et des moyens de réduction du faisceau laser étant monolithique.

Ainsi, cet exemple résout également le problème de la tension élevée à appliquer entre les électrodes tout en permettant de diminuer le seuil de la cavité microlaser. En effet, avec cette structure, il est possible de ramener l'épaisseur du second matériau à environ 100µm. Ceci permet, dans le cas d'un matériau électrooptique de limiter la tension nécessaire à une valeur comprise entre 50 et 100 volts. Par ailleurs, le seuil de déclenchement du microlaser se trouve réduit à environ quelques milliwatts. Enfin, cette structure est compatible avec des procédés de fabrication collectifs qui permettent à la fois de fabriquer des échantillons de petite taille et de respecter les coûts de fabrication.

Les moyens de réduction de la taille du faisceau laser peuvent être constitués par un miroir concave réalisé avec un micromiroir sur la face du milieu actif laser destinée à être traversée par le faisceau de pompage.

Le miroir de sortie peut être un miroir concave réalisé avec un micromiroir sur la face de sortie du second matériau. Les deux cavités peuvent être réalisées de façon à être optiquement stable.

Selon une variante, qui permet d'obtenir un microlaser fonctionnant en mode actif, et ayant une structure encore plus simple, la cavité est en outre en limite de stabilité optique, et des moyens sont prévus pour faire varier la longueur optique de la cavité de façon à la faire passer d'un état optiquement instable à un état optiquement stable.

Ainsi, on réalise un nouveau déclenchement actif, puisque l'état optiquement instable est un état à fortes pertes de la cavité, au contraire de l'état optiquement stable.

En outre, la structure obtenue est radicalement différente de la structure connue comme par exemple celle décrite dans l'article de J.J. Zayhowski (voir référence ci-dessus), puisqu'il n'y a plus qu'une seule cavité Fabry-Perot.

La cavité peut être une cavité hémisphérique, confocale, concentrique ou sphérique. Dans ce cas, la taille du faisceau dans la cavité est plus faible, et il est alors possible de diminuer les épaisseur de matériaux employés. La taille du microlaser s'en trouve encore diminuée. Ceci a pour conséquence de permettre de résoudre l'un des problèmes mentionnés ci-dessus, à savoir celui de la valeur importante de la tension à appliquer si le second matériau est un matériau électrooptique : en effet, l'épaisseur de ce dernier diminuant, le même champ électrique est obtenu pour une tension plus faible ($\vec{E}=\Delta V/e$, où e est l'épaisseur entre les électrodes).

Selon un mode particulier de réalisation, la cavité comporte un troisième matériau de longueur optique variable. Ceci ne nécessite cependant toujours qu'une seule cavité Fabry-Perot, et non pas deux comme dans l'art antérieur.

On obtient ainsi une structure très compacte, monolithique.

Les moyens pour faire varier la longueur optique de la cavité peuvent comporter des moyens pour faire varier la longueur du troisième matériau.

Selon un autre mode de réalisation, le milieu actif laser et le troisième matériau ont des indices optiques différents et les moyens pour faire varier la longueur optique de la cavité comportent des moyens pour faire varier l'indice optique du second matériau.

Le second matériau peut être un matériau électro-optique.

Ainsi, une seule cavité microlaser est fabriquée, dont on modifie la longueur optique pour déplacer la cavité du domaine instable à forte perte, au domaine stable à faible perte ce qui permet de la déclencher. Il n'est besoin que d'une seule cavité Fabry-Perot, même si elle contient plusieurs matériaux dont l'un est le matériau actif laser, le second le matériau dont est constitué l'élément permettant de multiplier la fréquence et le troisième est un matériau de longueur optiquement variable.

Lorsque les matériaux sont juxtaposés ou collés ou qu'ils adhèrent l'un à l'autre par adhérence moléculaire, la compacité du système est améliorée, ce qui est très important dans le cas d'un microlaser.

L'invention a également pour objet un microlaser comportant une cavité microlaser et des moyens optiques de pompage de la cavité.

## Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un microlaser émettant en continu, avec doubleur de fréquence, selon l'art antérieur,
- les figures 2A à 2E, déjà décrites, représentent schématiquement diverses dispositions possibles d'une cavité laser, avec absorbant saturable, selon l'art antérieur,
- la figure 3, déjà décrite, représente schématiquement un microlaser selon l'art antérieur, déclenché activement,
- la figure 4 représente la réflectivité de la deuxième cavité vue par le milieu actif laser de la première cavité dans un microlaser déclenché activement selon l'art antérieur,
- la figure 5 représente un mode de réalisation de la présente invention,
- les figures 6A et 6B représentent deux modes de réalisation de l'invention, avec déclencheur sous forme d'une couche mince d'absorbant saturable,
- les figures 7 à 9 représentent des microlasers avec un déclencheur actif, en double cavité Fabry-Pérot,
- les figures 10 et 11 représentent deux microlasers déclenchés en mode actif, et avec une seule cavité Fabry-Pérot,
- les figures 12A à 12E représentent des étapes de formation de microlentilles sur un milieu actif laser solide, pour un microlaser pas conforme à la présente invention,
- les figures 13A à 13C représentent d'autres étapes de réalisation de microlasers pas conformes a la présente invention,
- la figure 14 représente une variante d'exécution pas conforme à l'invention.

## Description détaillée de modes de réalisation de l'invention

L'invention concerne donc une cavité microlaser et un microlaser comportant cette cavité, la cavité étant essentiellement constituée, comme illustré sur la figure 5, d'un milieu actif laser 38, et étant fermée par un miroir d'entrée 40 et un miroir de sortie 42. A l'intérieur de la cavité, se trouvent en outre deux autres éléments :

- un élément de déclenchement 44 de la cavité, en mode passif,
- un matériau non linéaire 46 permettant de multiplier par un facteur n (n≥2) la fréquence de base du milieu actif laser 38.

Les divers modes de déclenchement vont être décrits par la suite, de manière plus détaillée. En ce qui concerne le matériau non linéaire, il peut s'agir par exemple d'un cristal non linéaire de KTP, qui permet d'obtenir un doublage de la fréquence de base du microlaser. Par exemple, un rayonnement à 1064nm obtenu à partir d'un milieu actif laser YAG:Nd est converti par ce cristal en rayonnement à 532nm. Un effet de quadruplement de la fréquence peut être obtenu en incorporant, à l'intérieur de la même cavité microlaser, un cristal non linéaire de KTP et un cristal non linéaire de BBO. L'invention s'applique également à tout type de cristal non linéaire permettant d'obtenir un doublage de la fréquence du milieu actif laser de la microcavité, ainsi qu'à tout type de cristal non linéaire permettant de multiplier la fréquence du milieu laser de la microcavité par un facteur n (n$\geq$2, par exemple n=3, 4,...). Par exemple, on peut utiliser les cristaux suivants : BBO, LBO, $KNbO_3$, $LiNbO_3$.

La présence simultanée, à l'intérieur de la cavité microlaser, de moyens de déclenchement 44 de cette cavité et de moyens 46 pour multiplier la fréquence de base du milieu actif laser a pour conséquence une augmentation très importante du rendement de fonctionnement des moyens permettant de multiplier la fréquence. Ainsi, pour un cristal doubleur, un rendement de 80% a été constaté avec cette structure.

Comme illustré sur la figure 5, d'autres éléments additionnels peuvent être compris dans la cavité, tels que par exemple une couche de colle 48 permettant de relier l'absorbant saturable 44 au milieu actif laser 38 ou une couche 50 d'un milieu qui permet d'adapter l'indice à l'interface des milieux 46 et 44.

Il est ainsi possible de réaliser une cavité plan-plan, dans laquelle les miroirs d'entrée 40 et de sortie 42 sont plans. Selon un autre mode de réalisation, il est possible également de réaliser une cavité stable avec des micromiroirs concaves en entrée et/ou en sortie de cavité microlaser. La présence d'au moins un miroir concave permet de stabiliser la cavité, celle-ci présentant alors un seuil de déclenchement plus faible ainsi qu'un meilleur rendement. En outre, la présence d'un micromiroir concave permet d'ajuster la taille du faisceau laser dans les différents milieux de la cavité, ce qui permet d'accroître encore la densité de puissance au niveau de l'absorbant saturable 44 et du cristal multiplicateur 46. Un micromiroir peut être réalisé directement sur le matériau actif laser, comme il sera expliqué plus loin. De façon optionnelle, il est possible de fabriquer un réseau de microlentilles en un matériau transparent (par exemple en silice) sur la surface du matériau laser 38 ou de l'élément situé en dernier dans la cavité, par exemple le cristal multiplicateur 46. Les dimensions typiques de ces microlentilles sont :

- diamètre de 100 à quelques centaines de microns,
- rayon de courbure de quelques centaines de micromètres à quelques millimètres.

Un procédé pour fabriquer ces microlentilles est décrit dans l'article de A. EDA et al., CLEO'92, paper CWG33, p. 282 (Conf. on Laser and Electro-optics, Anaheim, USA, May 1992).

Selon l'invention, la cavité microlaser est déclenchée passivement. L'élément déclencheur 44 (voir figure 5) est un élément absorbant saturable.

L'absorbant saturable se présente sous la forme d'une couche mince. La couche mince d'absorbant saturable est déposée directement sur le milieu amplificateur laser, comme illustré sur les figures 6A et 6B. Sur ces figures, la référence 52 désigne le milieu actif laser de la cavité microlaser, la référence 54 désigne le milieu optiquement non linéaire qui permet de multiplier la fréquence de base, par exemple un doubleur de fréquence, les références 56 et 58 désignent les miroirs d'entrée et de sortie de la cavité microlaser, et la référence 60 désigne un absorbant saturable sous la forme d'une couche mince déposée directement sur le milieu actif 52.

Deux types de couches minces peuvent être utilisés :

- un polymère contenant les molécules d'absorbant saturable. Typiquement pour un microlaser à 1,06 µm, on pourra utiliser, en tant qu'absorbant saturable, un colorant organique comme le bis(4-diéthylaminodithiobenzyl)nickel (BDN, Kodak, CAS N°51449-18-4) dans une solution contenant, en masse, 6% de poly(méthylméthacrylate) (PMMA) dans du chlorobenzène.

  Des variantes sont décrites plus loin, en liaison avec la description d'un procédé de préparation.

  Ce type de solution sera déposé à la tournette, directement sur le matériau laser (voir plus loin pour le procédé de préparation). On réalise ainsi des couches minces ayant une épaisseur de l'ordre de 1 à 5 µm par exemple 2µm, 3µm, 4µm.

- un autre type de couches minces sera obtenu par épitaxie en phase liquide (EPL), directement sur le matériau laser ou par tout autre procédé permettant de réaliser le même dépôt (même matériau, même dopage, mêmes propriétés) : la couche mince sera donc, de façon plus générale, susceptible d'avoir été obtenue par EPL. Le procédé de préparation par EPL est décrit plus loin et permet d'obtenir, sur le substrat 52 constitué par le milieu actif solide une couche d'épaisseur comprise entre 1 µm et 500 µm (par exemple : 100µm, 200µm, 300µm, 400µm). Elle est constituée d'un matériau de base identique au matériau de base du milieu actif solide (par exemple YAG), mais elle est dopée avec des ions lui conférant des propriétés d'absorbant saturable, par exemple du $Cr^{4+}$ pour un laser à 1,06 µm ou du $Er^{3+}$ pour un laser autour de 1,5 µm.

En fait, on adapte le type de dopant au laser que l'on veut déclencher, afin que la couche épitaxiée présente une absorption saturable à la longueur d'onde d'émission de ce laser.

Par conséquent, dans ce cas, le matériau actif laser et la couche d'absorbant saturable sont de même structure cristalline et ne se différencient que par les différents dopants qui affectent les propriétés cristallines et optiques de ces deux milieux.

Les propriétés de la couche mince, dans l'un et l'autre cas, seront très différentes.

Ainsi, on définit pour chaque type de couche, le seuil de dommage. Au-delà d'une certaine densité de puissance présente dans la cavité laser, on peut détruire la couche mince d'absorbant saturable. Cette densité de puissance limite, appelée seuil de dommage sera plus faible dans le cas du polymère avec colorant organique que dans le cas de la couche mince déposée par EPL. Dans le premier cas, il faudra donc travailler avec des énergies déposées dans la cavité plus faibles que dans le second cas.

D'autre part, dans un cas, la différence d'indice entre le matériau laser 52 et le polymère 60 introduit une interface optique entre les deux milieux. Dans l'autre cas, on ne peut faire l'EPL que sur le même matériau (par exemple YAG sur YAG, seul le dopage étant différent), ce qui limite l'étendue des applications mais permet d'ajuster l'indice de la couche épitaxiée à celle du milieu actif laser (qui sert de substrat d'épitaxie) et, donc, d'éviter la formation d'une interface optique entre les deux milieux.

Enfin, la nature de la couche mince influera sur la forme temporelle de l'impulsion laser. Dans le cas du colorant organique en solution dans un polymère, le temps de déclin du colorant est très court (~1ns), alors que dans le cas de la couche épitaxiée les ions constituant les impuretés ($Cr^{4+}$, $Er^{3+}$) ont des temps de déclin beaucoup plus long (de l'ordre de la microseconde). Ces propriétés conditionneront évidemment le choix de la couche mince en fonction de l'utilisation prévue.

La structure qui vient d'être décrite (absorbant saturable sous forme de couche mince déposée directement sur le milieu actif laser) permet d'obtenir une cavité microlaser compacte, ne nécessitant aucun alignement, ne nécessitant l'introduction d'aucun élément parasite tel qu'une colle optique, et permet en outre de ne pas recourir au codopage d'un même milieu de base pour former, à partir de ce même milieu de base, le milieu actif laser et le déclencheur passif.

Un procédé de fabrication d'un microlaser selon la présente invention, déclenché passivement, va maintenant être décrit.

On peut distinguer, dans un tel procédé, les étapes suivantes :

1) - le matériau actif laser est choisi et conditionné : il est orienté et découpé en lames d'épaisseur comprise entre 0,5 et 5mm. Les lames sont ensuite rodées et polies, ce qui permet d'atteindre l'épaisseur finale e voulue,

2) - une étape de préparation de l'absorbant saturable,

2a) Dans le cas d'un absorbant saturable classique, divers procédés sont connus, qui permettent de réaliser une cavité microlaser déclenchée. En particulier, il est possible de réaliser un codopage du matériau de base du milieu actif laser, afin de lui conférer des propriétés de milieu actif laser et d'absorbant saturable (par exemple, YAG dopé avec des ions néodyme $Nd^{3+}$ et chrome $Cr^{4+}$).

2b) Dans le cas d'un absorbant saturable déposé sous forme de couche mince, deux types de dépôt peuvent être réalisés :

2b1) - <u>1er type de dépôt : dépôt d'un colorant organique absorbant saturable, en solution dans un polymère.</u>

Typiquement, pour un microlaser fonctionnant à 1,06 µm, on peut utiliser, comme absorbant saturable un colorant organique comme le bis(4-diéthylaminodithiobenzyl)nickel (BDN, Kodak, CAS N° 51449-18-4) dans une solution de poly (méthylméthacrylate) (PMMA).

Pour cela, on prépare une solution contenant en masse 6% de poly(méthylméthacrylate) (PMMA, masses moyennes Polyscience) dans du chlorobenzène (Prolabo) en agitant 24 heures. On y rajoute 0,2% en masse de BDN et on agite encore 2 heures. La solution est ensuite filtrée et déposée sur le substrat, sur la face de sortie (opposée à la face d'entrée qui comporte le miroir dichroïque) au goutte à goutte avec un mouvement circulaire centrifuge. On peut utiliser pour ce dépôt à la "tournette" une machine standard telle que celle utilisée en microélectronique pour le dépôt des résines servant aux opérations de lithogravure. Le substrat est préalablement nettoyé de toutes les traces d'impuretés résultant du polissage. Il est mis en rotation (tournette) pendant 20 secondes à 2000 tours/minute, puis pendant 30 secondes à 5000 tours/minute. La couche est enfin mise à sécher 2 heures dans un four à 70°C.

On obtient ainsi un film de 1 µm d'épaisseur contenant 3% de molécules actives (BDN) et dont la densité optique est de 0,13 à 1,06 µm (74% de transmission) avant saturation. Un tel absorbant saturable a un temps de relaxation voisin de 10 ns et sature à une intensité voisine de 1 MW/cm$^2$.

En variant les paramètres de concentration du polymère, sa masse moléculaire ou son solvant, la proportion de colorant ainsi que la vitesse de rotation de la tournette, on peut ajuster les performances de l'absorbant saturable.

Les spécifications obtenues typiquement sont :

- épaisseur du film : 1 à 5 μm (par exemple 2μm, 3μm, 4μm),
- densité de molécules :         5 à 10% en masse,
- colorant :        BDN, mm=685g,
- transition vitreuse :        Tg=78°C,
- absorption à 1,06 μm :        10 à 70%,
- taux de saturation :        90%,
- section efficace :        $10^{-16}cm^2$,
- temps de relaxation :        2 à 15 ns,
- intensité de saturation :        0,1 à 1 MW/$cm^2$,
- non-uniformité du film :        <5% sur 1$cm^2$,
- taux de dépolarisation :        $<10^{-5}$,
- pertes à 800 nm :        <1%,
- fréquence de récurrence :        10-10000 Hz,
- photostabilité :        $10^8$ coups,
- technique de dépôt :        tournette.

D'autres polymères tels que le poly(vinylalcool) ou le poly(vinylacétate) ou encore poly(styrène) peuvent être employés dans leurs solvants respectifs) à la place du PMMA. On peut aussi utiliser le bis(4-diméthylaminodithiobenzyl) nickel (BDN, Kodak, CAS N°38465-55-3) comme colorant.

Le colorant peut aussi être incorporé dans un gel de silice ou bien greffé à même la chaîne de polymère.

De nombreux autres complexes métalliques de dithiene peuvent servir de colorant pour d'autres longueurs d'onde, comme décrit dans les articles de K.H. Drexhage et al., Optics Communication 10(1), 19(1974) et de Mueller-Westerhoff, Mol. Cryst. Liq. Cryst. 183, 291 (1990).

La technique peut aussi être employée pour le déclenchement de lasers fonctionnant à d'autres longueurs d'ondes que 1,06 μm. On déclenchera par exemple des lasers à Er ou Er+Yb (matériaux dopé Er ou Er+Yb où l'ion actif est Er) émettant autour de 1,5 μm avec du tétraéthyloctahydrotétraazapentaphènedithiolato-nickel (voir article de Mueller-Westerhoff cité ci-dessus).

2b2) - 2ème type de dépôt : dépôt d'une couche mince par épitaxie en phase liquide (EPL).

La couche A.S. (absorbant saturable) est obtenue par trempe du substrat, sur lequel on la dépose, dans une solution sursaturée convenablement choisie. Cette solution, ou bain d'épitaxie est un mélange d'un solvant et d'un soluté constitué de différents éléments formant le matériau final. Le substrat et la couche sont de même structure cristalline et ne se différencient que par les différents dopants qui affectent les propriétés cristallines et optiques de la couche. Les ions actifs tels Nd, Er, Yb rendent le matériau amplificateur, d'autres ions (Cr, Er) lui confèrent des propriétés d'A.S. et certains autres peuvent être utilisés pour faire varier l'indice de réfraction ou la maille cristalline du matériau (par exemple Ga, Ge, Lu, ...). Il est ainsi possible de contrôler les propriétés des couches réalisées.

Ce procédé peut s'appliquer à tout matériau existant sous forme de monocristaux (pour la réalisation des substrats) et pouvant être préparés par épitaxie en phase liquide. C'est le cas des matériaux cités plus haut pour le matériau de base du milieu actif laser : $Y_3A_{15}O_{12}$ (YAG), $Y_2SiO_5$ (YSO), $YVO_4$, $YLiF_4$ (YLF) ou $GdVO_4$. La composition du bain (choix du solvant et des substituants), les concentrations dans le soluté des différents oxydes et les conditions expérimentales de croissance (gamme de températures, mode opératoire, ...) sont ajustées pour chaque matériau afin d'obtenir des couches présentant la meilleure qualité cristalline possible.

Dans le cas des grenats (YAG), le solvant choisi est un mélange $PbO/B_2O_3$ et le soluté comprend un excès de $Al_2O_3$ afin de stabiliser la phase grenat. Le rapport soluté/solvant est alors calculé de façon à obtenir une croissance vers 1000°C.

En fonction de la composition du bain, de la température et du temps de dépôt, on peut ajuster l'épaisseur (1≤e≤200 μm, par exemple : 25μm, 50μm, 75μm, 100μm, 125μm, 150μm, 175μm ; il est possible également de réaliser e≥200μm) et la concentration en dopants dans les couches. La croissance d'une couche a lieu à température constante, ce qui permet d'obtenir une concentration en dopant homogène dans l'épaisseur de la couche. Le substrat est animé d'un mouvement de rotation uniforme ou alternée, ce qui permet une bonne homogénéité d'épaisseur.

On peut réaliser un substrat portant une ou deux couches d'A.S. suivant que l'on trempe une face du matériau actif laser dans le bain, en surface de celui-ci, ou les deux faces, le matériau laser étant totalement immergé dans le bain.

La (ou les) face (s) épitaxiée(s) obtenue(s) peu(ven)t être repolie(s) afin d'enlever une rugosité provoquée éventuellement par le procédé d'épitaxie et d'amener l'épaisseur de la (ou des) couche(s) épitaxiée(s) à l'épaisseur voulue pour le fonctionnement du microlaser.

3) - Une étape de dépôt ou d'assemblage du matériau non linéaire, permettant la multiplication de la fréquence de base du matériau laser par un facteur n (n$\geq$2), par exemple un cristal non linéaire de KTP. Le cristal est orienté selon l'angle d'accord de phase qui permet une multiplication de la fréquence laser.

4) - Une étape de dépôt des miroirs d'entrée et de sortie. Il peut s'agir de miroirs dichroïques, obtenus par un dépôt de multicouches diélectriques, procédé connu lui aussi de l'homme du métier et commercialement disponible.

5) - Une étape de découpe des lames pour obtenir des puces microlasers.

Les plaquettes comportant les miroirs, l'absorbant saturable et le milieu actif laser et éventuellement les microlentilles sont découpées par une scie diamantée (de type de celles qui sont utilisées en microélectronique pour la découpe des puces Si), pour obtenir les puces laser de quelques mm$^2$ de section.

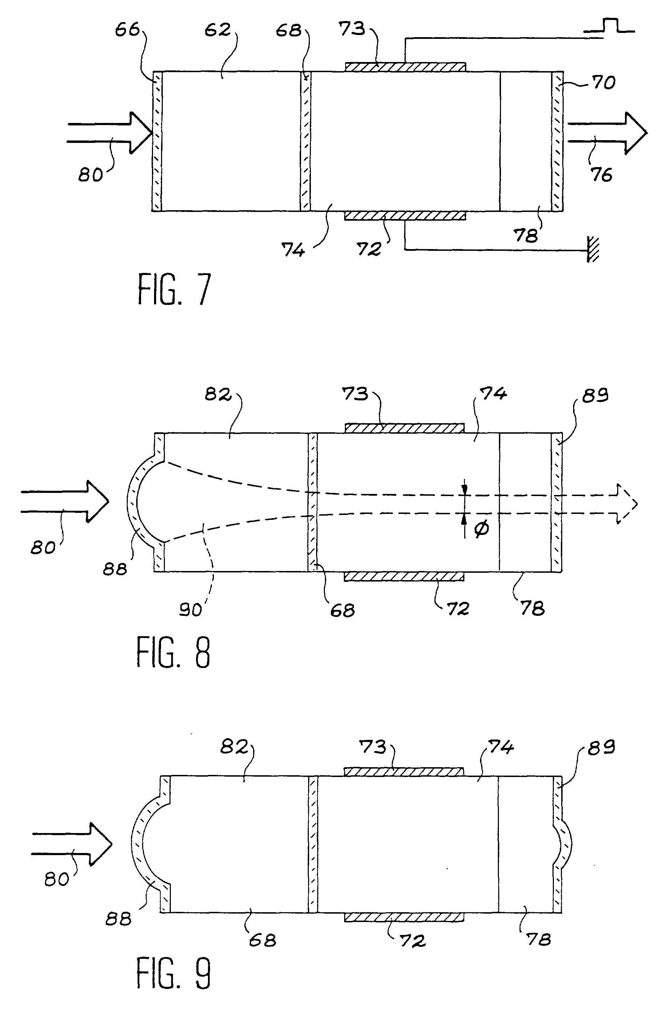

Un exemple d'une structure où la cavité microlaser et le microlaser sont déclenchés de manière active est illustré sur la figure 7 où la référence 62 désigne le milieu actif laser, qui forme une première cavité résonnante entre un miroir d'entrée 66 et un miroir intermédiaire 68. Une seconde cavité résonnante est formée entre le miroir intermédiaire 68 et le miroir de sortie 70. Cette seconde cavité résonnante comporte un élément 74 dont l'indice optique est apte à être modulé par une perturbation extérieure ; en particulier, ce matériau peut être un matériau électrooptique, par exemple constitué par du LiTaO$_3$. Une tension de commande externe peut être appliquée à des électrodes 72, 73, et l'application de cette tension entraîne l'établissement d'un champ électrique dans le matériau 74 et une modification de l'indice de ce matériau. Cette modification affecte le couplage des deux cavités et modifie la réflectivité du miroir intermédiaire 68 vu par le milieu actif laser. Conformément à l'invention, un matériau 78 optiquement non linéaire, permettant de multiplier la fréquence de base du milieu actif laser par un facteur n (n$\geq$2) est incorporé, par exemple, dans la seconde cavité Fabry-Pérot, avec le matériau 74 dont l'indice optique est apte à être modulé par une perturbation extérieure. Dans ce cas, on peut faire un traitement antireflet entre le matériau 74 et le matériau 78 pour ne pas perturber le fonctionnement de la seconde cavité résonnante. De manière alternative, le matériau 78 peut être incorporé dans la première cavité Fabry-Pérot, avec le milieu actif laser 62. Dans ce cas, on peut faire un traitement antireflet entre les matériaux 62 et 78. Là encore, la combinaison du déclencheur actif et du matériau qui permet de multiplier la fréquence par un facteur n entraîne un accroissement extrêmement important du rendement de fonctionnement de ce dernier, puisque celui-ci peut atteindre près de 80%.

Cet exemple peut encore être perfectionné en ajoutant des moyens de réduction de la taille du faisceau laser, ces moyens étant disposés en entrée de la première cavité résonnante, l'ensemble des deux cavités et des moyens de réduction du faisceau laser étant monolithique. Ce perfectionnement est représenté sur les figures 8 et 9, où des éléments identiques ou correspondant à ceux de la figure 7 sont désignés par les mêmes références. Des moyens de réduction de la taille du faisceau laser 90 sont désignés sur chacune de ces figures par la référence 88. Sur ces figures, ces moyens sont en fait constitués par un micromiroir 88 formé sur la face du matériau actif laser 82 qui est destinée à être traversée en premier par le faisceau de pompage 80.

Avec cette structure, il est possible de ramener l'épaisseur globale du microlaser, et en particulier l'épaisseur du matériau 74 à environ 100µm. Ceci permet, dans le cas d'un matériau électrooptique 74, de limiter la tension nécessaire à appliquer entre les électrodes 72, 73 à une valeur comprise entre 50 et 100 volts ; au contraire, dans le mode de réalisation de la figure 7 (tous les miroirs sont plans) des tensions importantes doivent être appliquées entre les électrodes 72, 73 pour pouvoir obtenir une variation d'indice suffisante permettant de déclencher la cavité. Ainsi qu'on l'a déjà expliqué ci-dessus dans l'introduction, en liaison avec la présentation de l'art antérieur décrit dans l'article du J.J. Zayhowsky, ces tensions importantes peuvent atteindre plusieurs centaines de volts, voire 1000 volts (voir figure 4). En outre, le mode de réalisation selon les figures 8 et 9, c'est-à-dire avec des moyens de réduction de la taille du faisceau laser, situés en entrée de la première cavité, permet de réduire le seuil de déclenchement du microlaser à environ quelques milliwatts.

De préférence, le rayon de courbure du micromiroir 88 est supérieur à la longueur totale du microlaser (longueur $L_1$ du milieu actif 82 + longueur $L_2$ du milieu 74 + longueur $L_3$ du milieu 78). Typiquement, le rayon de courbure sera supérieur à environ 1,5-2mm. Avec cette condition, on obtient une cavité stable optiquement, et un diamètre $\Phi$ du faisceau laser 90, à l'intérieur du milieu 74, relativement petit, typiquement de l'ordre de quelques dizaines de micromètres (contre environ 120µm dans l'art antérieur et dans le mode de réalisation de la figure 7).

Il est également possible de réaliser, comme illustré sur la figure 9, une structure dans laquelle un micromiroir concave 89 est prévu en sortie de la deuxième cavité. De plus, les rayons $R_1$ et $R_2$ de chacun des micromiroirs 88, 89 peuvent être choisis de façon à obtenir deux cavités stables optiquement. Cette condition est en fait remplie pour : $R_1 > L_1$ et $R_2 \geq L_2 + L_3$. Pour le cas où le milieu 78 serait incorporé dans la première cavité, cette condition s'écrirait : $R_1 > L_1 + L_3$ et $R_2 > L_2$. Le cas de la cavité plan concave de la figure 8 correspond à $R2 = \alpha$.

Il est également possible d'utiliser, comme milieu d'indice $n_2$ variable, de manière alternative à l'élément électrooptique 74 :

- soit un matériau magnétooptique dont l'indice $n_2$ est modifié en réponse à un champ magnétique externe, par exemple à l'aide d'un électroaimant situé à proximité de ce matériau,
- soit un matériau dont l'indice est fonction des variations de température ou des variations de pression imposées à l'extérieur.

Une autre structure de microcavité laser déclenchée activement va maintenant être présentée, qui peut être utilisée en combinaison avec un matériau intracavité permettant de multiplier la fréquence de base de la cavité microlaser par un facteur n ($n \geq 2$, par exemple un cristal doubleur de fréquence ou un cristal tripleur de fréquence).

Par rapport à la structure présentée ci-dessus (double cavité Fabry-Pérot, figures 7 à 9), et à la structure présentée dans l'article de J.J Zayhowski et al. déjà mentionné ci-dessus, la structure de la microcavité laser obtenue est beaucoup plus simple, et résout le problème de la complexité des structures connues de microlasers fonctionnant en mode actif. En outre, la structure obtenue permet, comme le mode de réalisation décrit en liaison avec les figures 7 à 9, de diminuer la tension de commande à utiliser, lorsqu'un matériau électrooptique est mis en oeuvre.

Selon ce mode de réalisation, la cavité microlaser comporte un milieu actif laser et deux micromiroirs formant une cavité Fabry-Pérot, cette cavité est en limite de stabilité optique, et des moyens sont prévus pour faire varier la longueur optique de la cavité microlaser de façon à la faire passer d'un état optiquement instable à un état optiquement stable.

Ainsi, un nouveau déclenchement actif est réalisé, puisque l'état optiquement instable est un état à forte perte de la cavité au contraire de l'état optiquement stable. Cette structure est radicalement différente des structures connues, en particulier de la structure décrite dans l'article de J.J. Zayhowski et al. (voir ci-dessus), puisqu'il n'y a plus qu'une seule cavité Fabry-Pérot.

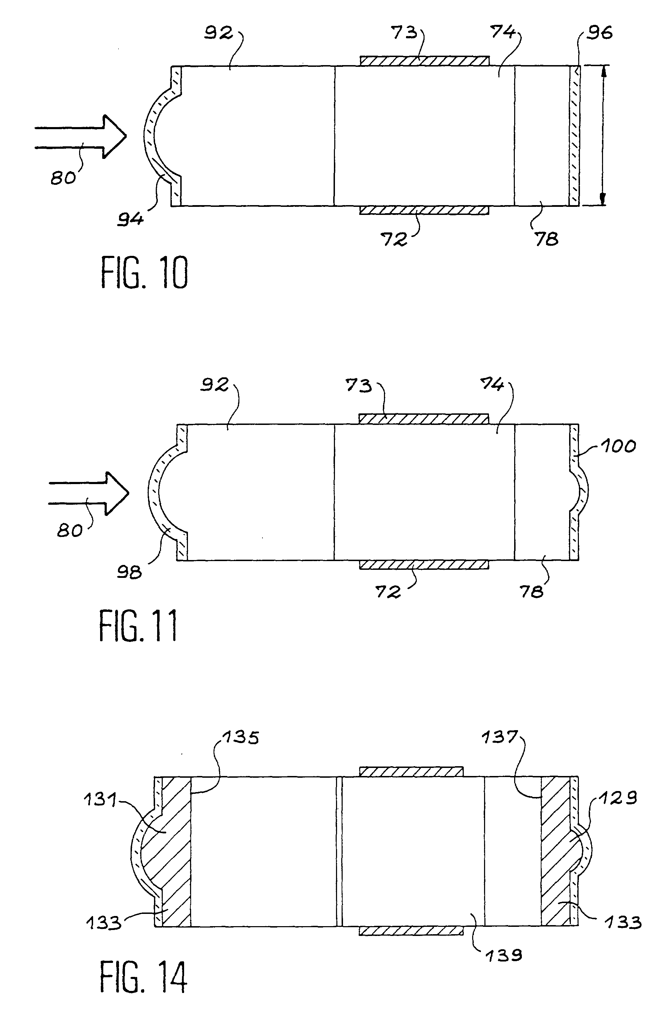

Ce mode de réalisation est illustré sur les figures 10 et 11. Sur ces figures, les références 72, 73, 74, 78, 80 désignent des éléments identiques à ceux des figures 7 à 9, qui -sont désignés par les mêmes références. Par ailleurs, la référence 92 désigne le milieu actif laser, les références 94 et 98 un miroir d'entrée de la microcavité laser et les références 96, 100 un micromiroir de sortie de la microcavité laser. Les milieux 92 et 74 peuvent être en contact l'un avec l'autre, une couche antireflet pouvant être déposée à l'interface 92-74 et à l'interface 74-78. La cavité microlaser représentée sur la figure 10 est une cavité hémisphérique, en limite de stabilité. Il s'agit d'une seule et unique cavité réalisée avec un matériau laser, un autre matériau dont on peut faire varier l'indice optique par une tension de commande externe, et un matériau permettant de multiplier la fréquence. Contrairement au cas des deux cavités couplées, décrites dans l'art antérieur, ces matériaux forment une seule et unique cavité Fabry-Perot. Les deux matériaux 92 et 74 peuvent être en contact par collage ou par adhérence moléculaire. A la jonction de ces deux matériaux, il peut exister une faible réflectivité de quelques % % due aux différences d'indices optiques des deux matériaux, mais cette réflectivité faible ne permet pas d'obtenir une résonance suffisante pour coupler les deux cavités en résonance, comme dans les systèmes décrits dans l'art antérieur.

Le mode de réalisation de la figure 11 diffère de celui de la figure 10 en ce que le miroir de sortie 100 est un miroir concave, de rayon de courbure $R_2$.

Il reste à déterminer les caractéristiques des miroirs de façon à réaliser une cavité, par exemple confocale (avec deux miroirs concaves comme sur la figure 5) ou hémisphérique (plan concave, comme sur la figure 4), à la limite de la stabilité.

Dans le cas de la cavité hémisphérique, la stabilité sera obtenue pour :

$$R_1 \geq L + \left(\frac{n_1}{n_2} - 1\right)L_2 + \left(\frac{n_1}{n_3} - 1\right)L_3 \, ,$$

avec $L = L_1 + L_2 + L_3$.

Dans le cas de la cavité confocale, la stabilité est obtenue pour :

$$R_1 \geq L + \left(\frac{n_1}{n_2} - 1\right)L_2 + \left(\frac{n_1}{n_3} - 1\right)L_3$$

$$R_2 \geq L + \left(\frac{n_3}{n_2} - 1\right)L_2 + \left(\frac{n_3}{n_1} - 1\right)L_1$$

Enfin, pour la cavité concentrique ou sphérique, la condition relative à la stabilité est :

$$R_1 \geq L_1 + \frac{L_2}{2}\frac{n_1}{n_2}$$

$$R_2 \geq L_3 + \frac{L_2}{2}\frac{n_3}{n_2}$$

Dans chaque cas, il est possible de faire varier soit l'indice $n_2$, soit l'indice $n_1$ soit l'indice $n_3$, soit l'une des longueurs $L_1$ ou $L_2$ ou $L_3$ de façon à satisfaire à l'inégalité correspondante pour amener la cavité dans un état stable. La variation de l'un de ces paramètres est obtenue par des moyens de commande externes. Comme, par ailleurs, l'état optiquement stable de la cavité correspond à un état à faible pertes et l'état optiquement instable à un état à fortes pertes, on a ainsi un nouveau moyen de déclencher activement une cavité.

Dans le cas des modes de réalisation illustrés sur les figures 10 et 11, l'indice $n_2$ du milieu électrooptique est modulé par l'application d'un champ électrique.

De manière alternative, afin de modifier la longueur optique de la cavité, il est possible de remplacer le matériau électrooptique 74 par :

- un matériau magnétooptique dont l'indice est modifié en réponse à un champ magnétique externe, par exemple à l'aide d'un électroaimant situé à proximité de ce matériau,
- un matériau dont l'indice $n_2$ dépend de la pression, la variation d'indice étant obtenue par une variation de pression.

Par ailleurs, il est possible de modifier la longueur géométrique totale de la cavité en montant le miroir de sortie sur des moyens piézoélectriques. Ceci conduit également à une variation commandée de la longueur optique de la cavité microlaser, et permet de faire passer celle-ci d'un état optiquement instable à un état optiquement stable.

Le fait d'utiliser une cavité hémisphérique, confocale, concentrique ou sphérique permet de concentrer le faisceau microlaser à l'intérieur du matériau électrooptique 74, dans le cas où un tel matériau est utilisé. La section du faisceau microlaser étant diminuée, il est possible de diminuer l'épaisseur du matériau d'indice $n_2$. Dans le cas où l'on utilise un matériau électrooptique définissant avec le matériau laser une cavité unique, on peut donc diminuer la distance nécessaire entre les électrodes de contact 72, 73 pour obtenir le champ E nécessaire à la modulation de l'indice $n_2$. La tension appliquée aux électrodes pour obtenir le même champ E s'en trouve diminuée d'autant.

Sur les figures 10 et 11, le matériau 78 a été représenté comme étant situé du côté de la sortie de la microcavité. Il peut être tout aussi bien incorporé entre le matériau électrooptique 74 et le milieu actif laser 92, le matériau électrooptique 74 étant alors en sortie de la microcavité.

Un procédé de fabrication d'un microlaser déclenché activement, et comportant deux cavités Fabry-Pérot couplées, la seconde incluant un matériau électrooptique, va maintenant être décrit. Ce procédé comporte les étapes suivantes :

1°) - Dans une première étape, on procède au calcul des rayons de courbure $R_1$ et $R_2$, si la stabilité d'une ou des cavités est souhaitée.

2°) - Dans une deuxième étape, on procède au découpage et au polissage double face d'une lame de matériau laser et d'une lame du second matériau d'indice variable, tel qu'un matériau électro-optique (par exemple $LiTaO_3$),

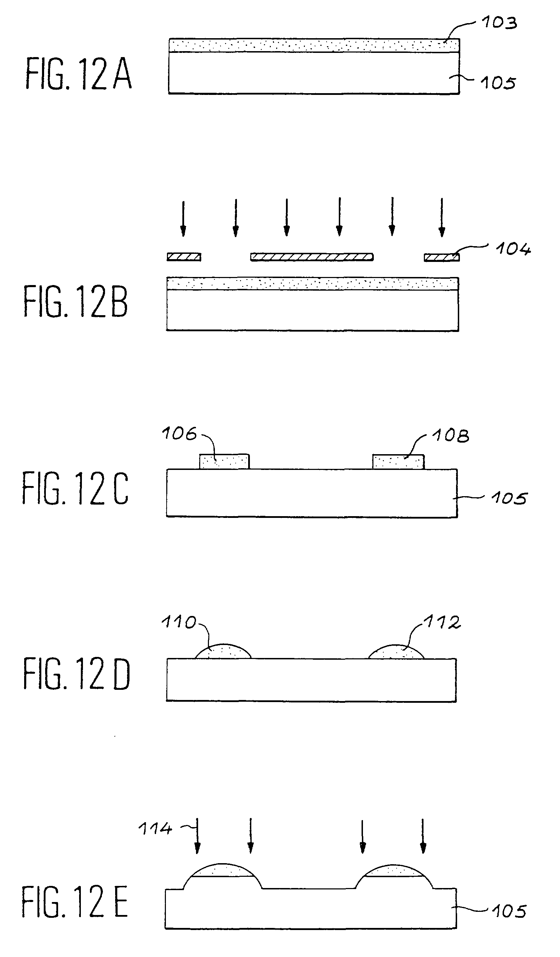

3°) - On fabrique ensuite par photolithographie et usinage, un micromiroir sur la face d'entrée du matériau laser (diamètre typique 100 à 500$\mu$m, et rayon de courbure $R_1$ de 1 à 2 mm). Cette étape est illustrée sur les figures 12A à 12E. Dans une première sous-étape (figure 12A), il est procédé au dépôt d'une couche 103 de résine photosensible sur la face d'entrée du matériau laser 105. Puis il est procédé à l'insolation de la résine à travers un masque 104 à l'aide d'un rayonnement UV (figure 12B). L'étape suivante (figure 12C) est une étape de révélation chimique de la résine, ne laissant subsister que des plots 106, 108 destinés à former les micromiroirs. Il est ensuite procédé au fluage thermique de la résine (figure 12D) pour former les micromiroirs 110, 112 en résine, et à l'usinage du matériau laser 105 à l'aide d'un faisceau d'ions 114 (figure 12E).

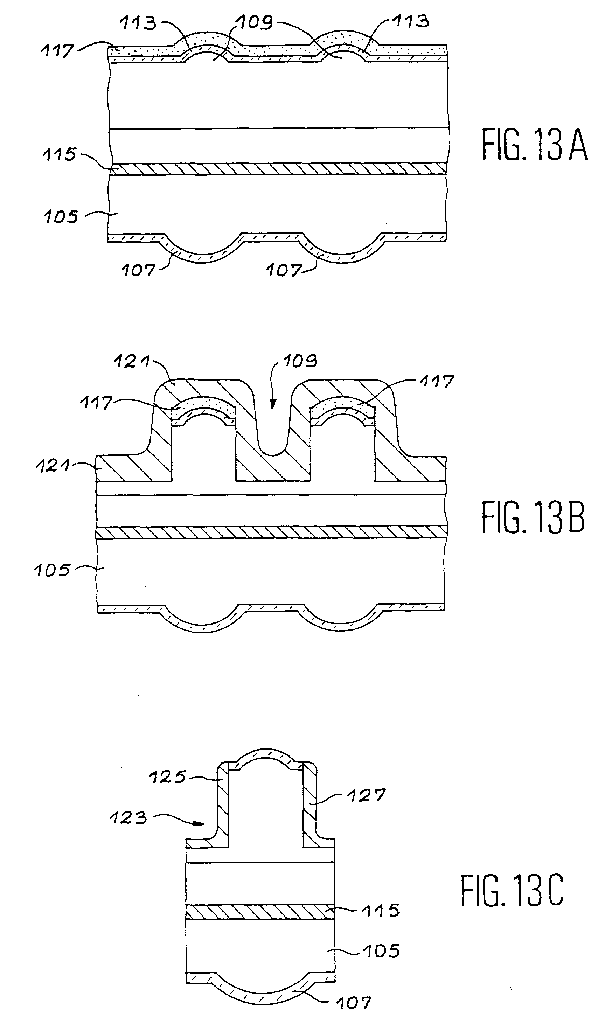

Les étapes 4°) à 9°) sont ensuite décrites en liaison avec la figure 13A.

4°) - Il est procédé au dépôt du miroir d'entrée 107 sur la face d'entrée du matériau laser 105.

5°) - Une étape de dépôt du matériau non linéaire, permettant la multiplication de la fréquence de base du matériau laser par un facteur n (n≥2), par exemple un cristal non linéaire de KTP. Le matériau est orienté selon l'angle d'accord de phase adapté à la multiplication de fréquence.

6°) - Puis il est procédé à la fabrication, par photolithographie et usinage, de microbossages 109 sur la surface de sortie du matériau électro-optique ou, suivant le cas, du matériau permettant de multiplier la fréquence (diamètre typique 100 à 500 μm et rayon de courbure $R_2$ de 1 à 2 mm). Dans le cas où le miroir de sortie est un miroir plan, il n'est pas procédé à la formation de microbossages sur la face de sortie du matériau électro-optique. Par ailleurs, le diamètre du miroir (microlentille) de sortie peut être inférieur au diamètre du micromiroir d'entrée.

7°) - On procède ensuite au dépôt du micromiroir de sortie 113 sur la face de sortie du matériau électro-optique ou du matériau permettant de multiplier la fréquence.

8°) - Dans la huitième étape, un miroir intermédiaire 115 peut être déposé à l'interface matériau laser-matériau électro-optique ou matériau laser-matériau multiplicateur de fréquence.

9°) - Il est possible de protéger la face de sortie par un dépôt de résine 117.

10°) - Il est possible de réaliser des rainures 109 (figure 13B) dans le matériau électro-optique à l'aide d'une scie à lame diamantée utilisée en microélectronique, pour pouvoir réaliser par la suite les électrodes avec l'espacement voulu.

11°) - Il est ensuite procédé au dépôt de contacts électriques par évaporation (par exemple, dépôt d'une couche Cr-Au 121 qui enrobe la résine 117 et le matériau électrooptique).

12°) - Il y a ensuite décapage chimique de la résine de protection (figure 13c).

Sur les figures 13B et 13C est représenté le cas où c'est le matériau électrooptique qui est situé du côté de la sortie de la microcavité laser. L'homme du métier saura adapter l'ordre des différentes étapes pour d'autres configurations.

13°) - Des puces élémentaires 123, de taille sensiblement égale à 1mm$^2$ sont ensuite découpées comme illustré sur la figure 13C, où les références 125, 127 désignent les électrodes de commande du matériau électrooptique.

14°) - Les puces sont montées sur un support de circuit imprimé métallisé et adapté en impédance, avec prise de contact électrique et montage dans un boîtier blindé.

15°) - Il peut ensuite être procédé au montage en boîtier et à la connexion avec une diode laser de pompe et un connecteur électrique pour le déclenchement.

Un procédé de réalisation d'un microlaser déclenché activement, et comportant une seule cavité Fabry-Pérot va maintenant être décrit. Ce procédé comporte les étapes suivantes :

1°) - Dans une première étape, on procède au calcul des rayons de courbure et des longueurs des différents milieux situés dans la cavité, de façon à être à la limite de la stabilité de la cavité.

2°) à 6°) - Voir les étapes 2 à 6 du procédé décrit ci-dessus.

7°) - Dans la septième étape, une couche antireflet est déposée à l'interface matériau laser-matériau électrooptique ou matériau laser-matériau multiplicateur de fréquence. Cette couche pourra être déposée soit sur la face de sortie plane du matériau laser, soit sur la face d'entrée plane du matériau électrooptique (ou du matériau multiplicateur, le cas échéant). Par ailleurs, ce dépôt n'est pas absolument indispensable pour le fonctionnement du système.

8°)- Les deux lames sont ensuite collées à l'aide d'une colle optique ou assemblage par tout autre procédé, par exemple par adhérence moléculaire.

9°) - 15°) - Voir étapes 9 à 15 déjà décrites ci-dessus.

Dans les deux cas ci-dessus de déclenchement actif (double cavité et une seule cavité) et selon une variante, il est possible de fabriquer les micromiroirs avec un masque à densité variable. Par ailleurs, comme illustré sur la figure 14, des micromiroirs 129, 131 peuvent être réalisés sur un matériau 133 comme le verre ou la silice, transparent à la longueur d'onde du laser. Ces substrats avec les micromiroirs peuvent ensuite être accolés sur les faces d'entrée 135 du milieu laser 136 et de sortie 137 du cristal doubleur ou tripleur 138 (ou du matériau électrooptique 139, si ces éléments sont inversés). La structure obtenue est illustrée sur la figure 14.

Par ailleurs, tous types de matériaux laser solides (cristaux ou verres) connus peuvent être utilisés. En particulier la longueur d'onde de base sera déterminée en fonction des ions actifs : autour de 1μm pour Nd et Yb, autour de 1,55μm pour Er et Er+Yb et autour de 2μm pour Tm et Ho.

**Revendications**

**1.** Cavité microlaser monolithique comportant un milieu ou premier matériau actif solide (38, 52), une couche mince (60) de matériau absorbant saturable, directement déposée sur le milieu actif solide (52), constituant des moyens

EP 0 742 615 B1

(44, 60) de déclenchement passif de la cavité, distincts du premier matériau actif solide, et au moins un élément en un second matériau optiquement non linéaire (46, 54) permettant de multiplier la fréquence de base de la cavité microlaser par un nombre entier n, n≥2, étant incorporé à l'intérieur de la cavité et étant distinct du premier matériau actif solide et des moyens de déclenchement de la cavité.

2. Cavité microlaser selon la revendication 1, la cavité étant stable.

3. Cavité microlaser selon la revendication 1 ou 2, la couche mince (60) étant composée d'un colorant organique en solution dans un solvant polymère.

4. Cavité microlaser selon la revendication 3, le colorant organique étant choisi parmi le bis(4-diéthylaminodithiobenzyl)nickel, ou le bis(4-diméthylaminodithiobenzyl)nickel, le solvant étant une solution de poly(méthylméthacrylate) (PMMA), de poly(vinylalcool) ou de poly(vinyl acétate ou de poly(styrène).

5. Cavité microlaser selon la revendication 1 ou 2, la couche mince (60) étant susceptible d'avoir été déposée par épitaxie en phase liquide.

6. Cavité microlaser selon la revendication 5, la couche mince étant composée d'un matériau de base, identique à celui du milieu actif solide et dopé avec des ions $Cr^{4+}$ ou $Er^{3+}$.

7. Microlaser comportant une cavité microlaser selon l'une des revendications précédentes et des moyens de pompage de cette cavité.

**Patentansprüche**

1. Monolithischer Mikrolaserresonator mit einem Medium oder ersten festen aktiven Material (38, 52), einer Dünnschicht (60) aus sättigbarem absorbierendem Material, direkt auf dem festen aktiven Medium (52) abgeschieden, die passive Güteschaltungseinrichtungen (44, 60) des Resonators bildend, verschieden vom ersten festen aktiven Material, und wenigstens ein Element aus einem zweiten, optisch nichtlinearen Material (46, 54), das ermöglicht, die Grundfrequenz des Mikrolaserresonators mit einer ganzen Zahl n, n≥2, zu multiplizieren und das im Innern des Resonators inkorporiert ist und verschieden ist vom ersten festen aktiven Material und von den Güteschaltungseinrichtungen des Resonators.

2. Mikrolaserresonator nach Anspruch 1, wobei der Resonator stabil ist.

3. Mikrolaserresonator nach Anspruch 1 oder 2, wobei die Dünnschicht (60) durch einen in einem polymeren Lösungsmittel gelösten organischen Farbstoff gebildet wird.

4. Mikrolaserresonator nach Anspruch 3, wobei der organische Farbstoff ausgewählt wird zwischen Bis(4-Diethylaminodithiobenzyl)Nickel und Bis(4-Dimethylaminodithiobenzyl)Nickel, und das Lösungsmittel eine Lösung aus Polymethylmethacrylat (PMMA), Polyvinylalkohol oder Polyvinylacetat oder Polystyrol ist.

5. Mikrolaserresonator nach Anspruch 1, wobei die Dünnschicht (60) vorzugsweise mittels Flüssigphasen-Epitaxie abgeschieden worden ist.

6. Mikrolaserresonator nach Anspruch 5, wobei die Dünnschicht durch ein Basismaterial gebildet wird, das mit dem des festen aktiven Mediums identisch ist und mit $Cr^{4+}$- oder $Er^{3+}$-Ionen dotiert ist.

7. Mikrolaser mit einem Mikrolaserresonator nach einem der vorangehenden Ansprüche und mit Pumpeinrichtungen dieses Resonators.

**Claims**

1. Monolithic microlaser cavity incorporating a medium or first solid, active material (38, 52), a saturable absorber material film (60) directly deposited on the solid active medium (52), constituting means (44, 60) for the passive switching of the cavity, which are separate from the first solid, active material, and at least one element of a second,

**13**

optically non-linear material (46, 54) making it possible to increase the base frequency of the microlaser by an integer n, $n \geq 2$, which is incorporated into the interior of the cavity and is separate from the first solid, active material and the cavity switching means.

2. Microlaser cavity according to claim 1, the cavity being stable.

3. Microlaser cavity according to claim 1 or 2, the film (60) being formed by an organic dye dissolved in a polymer solvent.

4. Microlaser cavity according to claim 3, the organic dye being chosen from among bis(4-diethylaminodithiobenzyl) nickel or bis(4-dimethylaminodithiobenzyl) nickel, the solvent being a solution of polymethyl methacrylate (PMMA), polyvinyl alcohol, polyvinyl acetate or polystyrene.

5. Microlaser cavity according to claim 1 or 2, the film (60) being depositable by liquid phase epitaxy.

6. Microlaser cavity according to claim 5, the film being formed from a basic material identical to that of the solid active medium and doped with $Cr^4$ or $Er^3$ ions.

7. Microlaser incorporating a microlaser cavity according to one of the preceding claims and means for pumping said cavity.

FIG. 1

FIG. 3

FIG. 4

FIG. 2A

FIG. 2B

FIG. 2C

FIG. 2D

FIG. 2E

FIG. 5

FIG. 6A

FIG. 6B

FIG. 7

FIG. 8

FIG. 9

FIG. 10

FIG. 11

FIG. 14

FIG. 12 A

103

105

FIG. 12 B

104

FIG. 12 C

106    108

105

FIG. 12 D

110    112

FIG. 12 E

114

105

FIG.13 A

FIG.13 B

FIG.13 C